# EUROPÄISCHE PATENTSCHRIFT

(11) **EP 2 875 889 B1**
(45) Veröffentlichungstag und Bekanntmachung des Hinweises auf die Patenterteilung: **11.11.2020**
(21) Anmeldenummer: 14176247.6
(22) Anmeldetag: 09.07.2014
(51) Int. Cl.: B23D 47/02, B23Q 1/74, B25H 1/00, B25H 1/14

(54) **Kapp- und/oder Zugsäge**
Mitre and/or pull saw
Scie à onglet et/ou à tirer

(30) Priorität: 26.11.2013 DE 102013224128
(43) Veröffentlichungstag der Anmeldung: 27.05.2015
(73) Patentinhaber: Metabowerke GmbH, 72622 Nürtingen (DE)
(72) Erfinder: Hörmann, Stephan, 72639 Neuffen (DE); Wilke, Dirk, 72582 Grabenstetten (DE); Fischer, Florian, 72622 Nürtingen (DE)
(74) Vertreter: Markfort, Iris-Anne Lucie

(56) Entgegenhaltungen:
- WO-A2-2005/102626
- DE-A1-102010 062 255
- DE-U1-202011 050 786

## Beschreibung

Die Erfindung betrifft eine Kapp- und/oder Zugsäge nach dem Oberbegriff des Anspruchs 1, mit einem Untertisch zur Aufnahme und Abstützung eines zu bearbeitenden Werkstücks.

Selbstverständlich betrifft die vorliegende Erfindung somit auch Kappsägen ohne Zugverstellung, sowie Sägen mit weiteren Zusatzfunktionen, wie der Möglichkeit des Tischsägebetriebs und Tischkreissägens, oder Sägen ohne Kappfunktion.

Derartige Sägen weisen in der Regel ferner einen Sägekopf auf, welcher ein Sägeblatt, einen Obertisch und eine Schutzhaube umfasst, wobei im Kappbetrieb der Sägekopf zwischen einer von dem Untertisch angehobenen Stellung und einer in Richtung auf den Untertisch abgesenkten Stellung verschwenkbar ist.

Um eine möglichst sichere Handhabung der Säge während der Werkstückbearbeitung zu gewährleisten und nach Möglichkeit optimale Bearbeitungsergebnisse zu erzielen, ist es erforderlich, dass das zu bearbeitende Werkstück sicher und stabil auf der Werkstückauflagefläche, das heißt einer Oberseite des Untertischs, abgestützt ist. Um dies zu gewährleisten sind aus dem Stand der Technik mehrere Lösungen bekannt.

So offenbart beispielsweise die deutsche Gebrauchsmusterschrift der Anmelderin DE 20 2008 011 654 U1 eine Kapp- und Zugsäge, deren Untertisch bzw. Trägerkörper mit einem verlängerten Auslegearm vorgesehen ist. Der verlängerte Auslegearm ist vergleichsweise kurz, um den Transport der Säge nicht unnötig zu erschweren bzw. den von der Säge eingenommenen Raum nicht unnötig zu vergrößern.

Eine weitere Lösung ist aus der deutschen Offenlegungsschrift DE 10 2010 062 255 A1 bekannt, die eine Kappsäge offenbart, bei der an den Untertisch bzw. Trägerkörper Abstützblöcke angesetzt werden können, wobei die Verbindung von Abstützblock und Untertisch über ein Formschlusselement ermöglicht wird, das in ein korrespondierendes Formschlusselement an dem Trägerkörper eingesetzt wird. Nachteilig bei dieser Lösung ist jedoch gegebenenfalls, dass die ansetzbaren Abstützblöcke vergleichsweise viel Platz in Anspruch nehmen und insbesondere bei einem Transport der Kappsäge unhandlich sind. Weiterhin kann es passieren, dass die separat ausgebildeten Abstützblöcke beim Transport der Säge vergessen werden und dann, wenn sie benötigt werden, nicht zur Hand sind.

Die DE 20 2011 050 786 U1 offenbart eine Kapp- und/oder Zugsäge nach dem Oberbegriff des Anspruchs 1.

Demgegenüber besteht eine Aufgabe der vorliegenden Erfindung darin, eine sichere und stabile Abstützung des zu bearbeitenden Werkstücks, insbesondere auch bei längeren Werkstücken, zu gewährleisten und zugleich die aus dem Stand der Technik bekannt gewordenen Nachteile zu vermeiden oder zumindest zu verringern.

Die Aufgabe wird vorliegend durch eine Kapp- und /oder Zugsäge mit den Merkmalen des Anspruchs 1 gelöst. Die Unteransprüche umfassen weitere Ausgestaltungen der Kapp- und /oder Zugsäge.

Der Untertisch umfasst wenigstens eine, bevorzugt zwei Stützverlängerungen mit einem Auflageabschnitt, der zur Aufnahme und Abstützung des zu bearbeitenden Werkstücks dient. Jede Stützverlängerung ist zwischen einer eingeschobenen Stellung und einer ausgezogenen Stellung relativ zu dem Untertisch in einer zur Oberfläche des Untertischs parallelen Ebene hin und her bewegbar und weist hierzu wenigstens einen Verbindungssteg auf, der zur Verbindung der Stützverlängerung mit dem Untertisch zumindest abschnittsweise in eine korrespondierende Ausnehmung an dem Untertisch einschiebbar und zur Lösung der Verbindung vollständig aus dieser herausziehbar ist (die Einschiebbewegung bzw. die Auszugsbewegung erfolgt ebenfalls in der zur Oberfläche des Untertischs parallelen Ebene). Somit kann die Stützverbindung insbesondere für den Transport der Kapp- und Zugsäge durch Einschieben ihres Verbindungsstegs besonders kompakt an dem Untertisch aufgenommen sein, während sie in Abhängigkeit von der Länge des zu bearbeitenden Werkstücks für dessen Bearbeitung aus dem Untertisch herausziehbar gestaltet ist. Je nach Anwendungsfall kann es sinnvoll sein, dass die Stützverlängerung stufenlos zwischen der eingeschobenen und der ausgezogenen Stellung relativ zu dem Untertisch verschiebbar ist oder dass beispielsweise mit Hilfe von Raststufen oder dergleichen eine stufenweise Verstellung vorgesehen ist.

Die Stützverlängerung weist weiter wenigstens einen Stützschenkel zur stabilen Abstützung der Stützverlängerung auf. Dieser ist besonders dann vonnöten, wenn die Stützverlängerung in einer ausgezogenen Stellung relativ zu dem Untertisch angeordnet ist. Die eingezogene Stellung der Stützverlängerung bezeichnet eine Stellung, in der der Verbindungssteg der Stützverlängerung maximal in die korrespondierende Ausnehmung an dem Untertisch eingeschoben ist. Die ausgezogene Stellung der Stützverlängerung gibt indes eine Stellung an, in der der Verbindungssteg auf eine maximal mögliche Länge aus der Ausnehmung an dem Untertisch ausgezogen ist, jedoch immer noch eine Verbindung zu dem Untertisch herstellt. Somit bezeichnet die ausgezogene Stellung der Stützverlängerung nicht eine dritte Stellung, in der die Stützverlängerung vollständig von dem Untertisch gelöst und unabhängig von diesem mit einem vollkommen frei wählbaren Abstand zu dem Untertisch aufgestellt werden kann.

Die Stützverlängerung kann in einer solchen dritten, von dem Untertisch gelösten Stellung des Verbindungsstegs als separate Abstützung für das zu bearbeitende Werkstück genutzt werden. In einem von dem Untertisch gelösten Zustand sind die wenigstens zwei Stützverlängerungen erfindungsgemäß miteinander verbindbar. Zur Herstellung einer Verbindung der wenigstens zwei Stützverlängerungen miteinander ist an jedem Stützschenkel der miteinander verbindbaren Stützverlängerungen wenigstens eine korrespondierende Aufnahmeausnehmung zur Aufnahme des wenigstens einen Verbindungsstegs der jeweils zu verbindenden Stützverlängerung vorgesehen. Somit wird auch bei der Verbindung der Stützverlängerungen miteinander diese Verbindung über die Verbindungsstege erreicht, die in einer korrespondierenden Aufnahmeausnehmung aufgenommen werden. Je nachdem, ob es sich bei der Aufnahmeausnehmung um eine Sackloch- oder Durchgangsbohrung handelt, sind unterschiedliche Verbindungskonfigurationen der Stützverlängerungen denkbar, beispielsweise auch solche, bei denen mehr als zwei Stützverlängerungen miteinander verbunden werden.

Weiterhin kann der Auflageabschnitt der Stützverlängerung in einem mit dem Untertisch verbundenen Zustand im Wesentlichen bündig mit der das zu bearbeitende Werkstück abstützenden Oberfläche des Untertischs abschließen. Durch einen solchen bündigen Abschluss wird eine Verlängerung des Untertischs mithilfe der Stützverlängerung erreicht.

Der Auflageabschnitt der Stützverlängerung kann ferner in einem von dem Untertisch gelösten Zustand, in dem er als separate Abstützung für das zu bearbeitende Werkstück dient, in einer horizontalen Ebene mit der abstützenden Oberfläche des Untertischs liegen. Somit weist der Auflageabschnitt der Stützverlängerung in der dritten Stellung des Verbindungsstegs, in dem die Stützverlängerung vollkommen von dem Untertisch gelöst ist und mit einem beliebigen Abstand zu dem Untertisch angeordnet werden kann, die gleiche Höhe auf, wie die das Werkstück abstützende Oberfläche. Hierdurch können auch besonders lange Werkstücke nicht nur über den Untertisch abgestützt werden, sondern zusätzlich über die Stützverlängerung, wodurch eine besonders stabile Abstützung des zu bearbeitenden Werkstücks erreicht werden kann.

Der Auflageabschnitt kann ferner integral mit dem Stützschenkel ausgebildet sein. Alternativ kann dieser jedoch auch separat zu dem Stützschenkel ausgebildet und gegebenenfalls mit einem Abstand zu diesem an der Stützverlängerung angeordnet sein. Eine integrale Ausbildung des Auflageabschnitts an dem Stützschenkel kann durch eine verringerte Teilezahl vorteilhaft in Bezug auf die Montage und Herstellungskosten sein, während eine separate Ausbildung vorteilhaft sein kann, wenn der Auflageabschnitt relativ zu dem Stützschenkel bewegbar gestaltet sein soll.

Weiterhin kann die Stützverlängerung wenigstens zwei Stützschenkel aufweisen, von denen wenigstens einer relativ zu dem Verbindungssteg bewegbar, insbesondere verschiebbar, ausgebildet ist. Bei dieser Ausführungsform können beispielsweise die wenigstens zwei Stützschenkel der Stützverlängerung in einem von dem Untertisch gelösten Zustand dazu genutzt werden, die Stützverlängerung stabil und sicher von einer entsprechenden Unterlage abzustützen, indem sie mit Abstand zueinander angeordnet werden. Auch in einem mit dem Untertisch verbundenen Zustand können die wenigstens zwei Stützschenkel die Stützverlängerung in ihrem ausgezogenen Zustand besonders gut stabilisieren. In der eingeschobenen Stellung der Stützverlängerung können die beiden Stützschenkel, dadurch dass wenigstens einer verschiebbar ausgebildet ist, in Anlage zueinander gebracht werden, wodurch sie sehr kompakt stehen.

Neben der genannten verschiebbaren Ausführungsform sind jedoch auch weitere Alternativen denkbar. Beispielsweise kann einer der Stützschenkel relativ zu dem Verbindungssteg schwenkbar ausgebildet sein. Gegebenenfalls weist der Verbindungssteg neben einer Schwenkachse für die Schwenkbewegung des wenigstens einen verschwenkbaren Stützschenkels auch eine Ausnehmung auf, in der der verschwenkte Stützschenkel aufgenommen werden kann, wenn dies gewünscht ist. Eine solche verschwenkbare Ausgestaltung von wenigstens einem der Stützschenkel ermöglicht eine weiterhin besonders platzsparende Anordnung der Stützverlängerung an dem Untertisch der Kapp- und /oder Tischkreissäge, ohne die Funktionalität der Stützverlängerung zu beeinträchtigen.

Ferner kann vorgesehen sein, dass wenigstens einer der Stützschenkel einer Stützverlängerung eine flächige Bodenseite zum stabilen Abstellen auf einer ebenen Oberfläche aufweist. Mit dem Bereitstellen einer flächigen Bodenseite wird eine weiterhin erhöhte Stabilität gewährleistet.

Gemäß einer Weiterbildung kann bei zwei miteinander verbundenen Stützverlängerungen die flächige Bodenseite einer der Stützverlängerungen zur Aufnahme und Abstützung des zu bearbeitenden Werkstücks genutzt werden.

Durch die vorliegende Erfindung wird zum Einen eine ausziehbare Verbreiterung des Untertischs bereitgestellt, die in eingeschobenem Zustand eine besonders kompakte Bauform der Kapp- und /oder Zugsäge ermöglicht und im ausgezogenen Zustand eine verbesserte Abstützung des zu bearbeitenden Werkstücks bereitstellt. Indem die Stützverlängerung in den Untertisch einschiebbar ist, wird ein besonders unkomplizierter Transport der Kapp- und /oder Zugsäge ermöglicht, wobei insbesondere die Stützverlängerungen durch Integration in den Untertisch weniger leicht vergessen werden. Dadurch, dass sich die Stützverlängerung zudem auch noch von dem Untertisch vollständig abnehmen lässt und als separate Abstützung für das zu bearbeitende Werkstück genutzt werden kann, können insbesondere auch sehr lange Werkstücke stabil und sicher abgestützt werden, da die separate Abstützung in einem beliebigen Abstand zu dem Untertisch der Kapp- und /oder Zugsäge angeordnet werden kann.

Schließlich können bei einer Weiterbildung der Erfindung mehrere Stützverlängerungen miteinander verbunden werden und hierdurch einen zusammenhängenden stabilen Abstützungsblock bilden, der im Wesentlichen die gleiche Höhe aufweist, wie der Untertisch der Säge. Auf diese Weise kann die Stabilität der Stützverlängerung, welche als separate Abstützung für das zu bearbeitende Werkstück genutzt werden soll, weiter erhöht werden.

Nachfolgend wird die vorliegende Erfindung unter Bezugnahme auf die beigefügten Figuren näher erläutert. Diese zeigen eine bevorzugte Ausführungsform der vorliegenden Erfindung, wobei diese jedoch nicht auf die gezeigte Ausführungsform beschränkt ist. Die Merkmale der Kapp- und Zugsäge sind dabei in Kombination miteinander dargestellt. Einem Fachmann ist jedoch selbstverständlich klar, dass diese auch losgelöst voneinander zu betrachten sind und gegebenenfalls zu weiteren sinnvollen Unterkombinationen innerhalb des Schutzumfangs des Anspruchs 1 verbunden werden können.

Die Figuren zeigen schematisch:
- Figur 1: eine schematische Ansicht einer erfindungsgemäßen Kapp- und Zugsäge in isometrischer Darstellung; und
- Figur 2: die Verwendung einer Kapp- und Zugsäge gemäß Figur 1 im Betrieb.

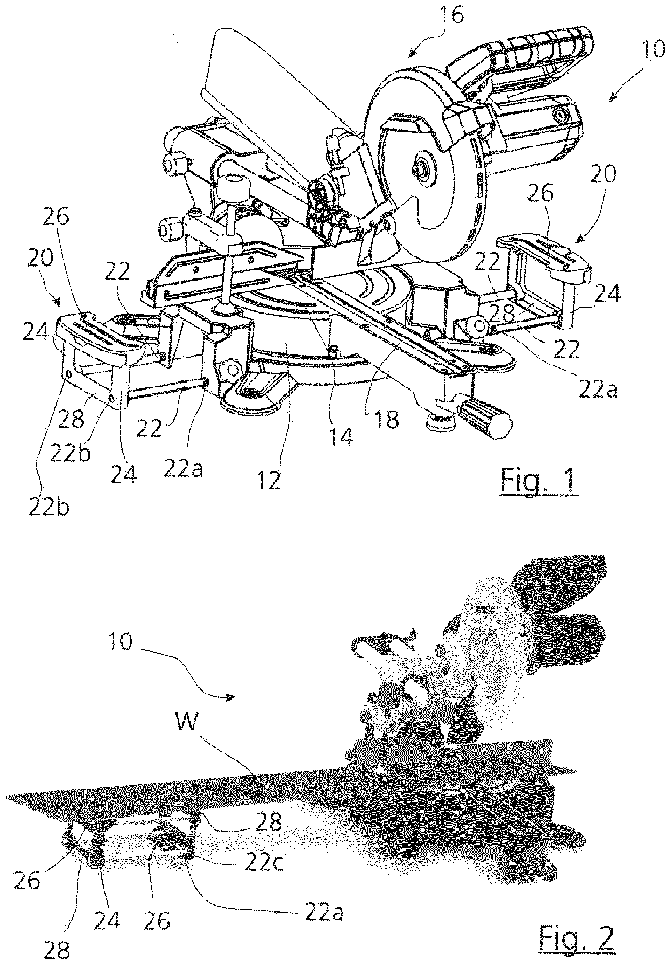

In der Figur 1 ist eine erfindungsgemäße Kapp- und Zugsäge gezeigt, die allgemein mit dem Bezugszeichen 10 bezeichnet ist. Diese umfasst einen Untertisch 12 mit einer ein Werkstück abstützenden Oberfläche 14 sowie ein Sägeaggregat 16, dessen Merkmale im Wesentlichen denen der in der Gebrauchsmusterschrift DE 20 2008 011 654 U1 gezeigten Kapp- und Zugsäge entsprechen. Der Untertisch 12 ist ferner mit einem verlängerten Auslegearm 18 versehen, in dessen Oberseite ein Eintauschschlitz eingebracht ist, in den mit dem Absenken der Säge 10 auch deren Sägeblatt eintauchen kann.

Für eine verbesserte Abstützung eines zu bearbeitenden Werkstücks W (vgl. Figur 2) auf dem Untertisch 12 sind ferner in der Figur 1 zwei Stützverlängerungen 20 vorgesehen, die über ihre Verbindungsstege 22 mit dem Untertisch 12 verbunden werden können. Hierzu werden die freien Enden 22a der Verbindungsstege 22 in korrespondierende Ausnehmungen (nicht dargestellt) an dem Untertisch 12 eingeschoben. Wie man in der Figur 1 deutlich erkennen kann, sind an den freien Enden 22a geringfügige Verdickungen der Verbindungsstege 22 vorgesehen, die beispielsweise einen aus Gummi oder dergleichen hergestellten Ring aufweisen, um einen definierten Widerstand gegen ein unbeabsichtigtes Herauslösen des Verbindungsstegs 22 aus der korrespondierenden Ausnehmung zu verhindern.

Nichtsdestotrotz lassen sich die Stützverbindungen 20 grundsätzlich, sobald dieser Widerstand überwunden ist, vollständig von dem Untertisch 12 lösen und als separate Abstützung für ein zu bearbeitendes Werkstück nutzen.

In der vorliegend gezeigten Darstellung umfasst jede der Stützverlängerungen 20 zwei Verbindungsstege 22. Selbstverständlich reicht bei einer entsprechenden Ausbildung der Stützverbindung auch ein einziger Verbindungssteg aus, der zudem nicht, wie dargestellt, als Rundstab ausgebildet sein muss, sondern auch beispielsweise als Flachteil ausgebildet sein kann. Weiterhin können die Verbindungsstege aus unterschiedlichen Materialien hergestellt sein. Beispielsweise sind Aluminium und Aluminiumlegierungen aufgrund des damit verbundenen geringen Gewichts ebenso denkbar wie andere metallische oder Plastik-Werkstoffe.

Die vorliegenden Verbindungsstege 22 ermöglichen mit Ausnahme von dem vollständigen Lösen ein stufenloses Verstellen der Stützverbindung 20 relativ zu dem Untertisch 12. Alternativ kann es jedoch auch sinnvoll sein, mehrere Stufen vorzusehen, die gegebenenfalls mit Hilfe einer Skala einen bestimmten Abstand zum Untertisch 12 angeben können.

Mit ihrem jeweils anderen Ende 22b sind die Verbindungsstege 22 mit Stützschenkeln 24 der Stützverlängerung 20 verbunden. Dabei ist jedem Verbindungssteg 22 ein Stützschenkel 24 zugeordnet. Alternative Ausgestaltungen, bei denen beispielsweise ein einziger Stützschenkel vorgesehen ist, der einen oder mehrere Verbindungsstege aufnimmt, sind ebenfalls denkbar. Als Material für die Stützschenkel können beispielsweise leicht zu verarbeitende Plastikwerkstoffe aufgrund ihrer geringen Herstellungskosten ebenso in Frage kommen, wie andere in der Herstellung von Werkzeugmaschinen bekannten Werkstoffe.

Zur Abstützung eines zu bearbeitenden Werkstücks W (vgl. Figur 2) ist ein Auflageabschnitt 26 an der Stützverbindung 20 vorgesehen, der im Betrieb der Stützverbindung 20 im Wesentlichen in einer horizontalen Ebene mit der abstützenden Oberfläche 14 des Untertischs 12 liegt. Auf diese Weise schließt der Auflageabschnitt 26 in einer eingeschobenen Stellung der Stützverbindung 20 (in der er seitlich an dem Untertisch 12 anliegt) im Wesentlichen bündig mit der abstützenden Oberfläche 14 ab. In einer ausgezogenen Stellung oder in einem Zustand, in dem die Stützverbindung 20 als separate Abstützung für das zu bearbeitende Werkstück genutzt werden kann (vgl. Figur 2), weist der Auflageabschnitt 26 ebenfalls im Wesentlichen die gleiche Höhe auf, wie die abstützende Oberfläche 14 des Untertischs 12. Hierdurch wird eine stabile und sichere Abstützung auch längerer Werkstück, wie beispielsweise in Figur 2 dargestellt, gewährleistet.

In der gezeigten Ausführungsform ist der Auflageabschnitt integral mit den beiden Stützschenkeln 24 der jeweiligen Stützverlängerung 20 ausgebildet. Alternativ ist es jedoch ebenso denkbar diesen separat hiervon auszugestalten, insbesondere wenn diese relativ zu den Stützschenkeln 24 bewegbar sein soll (z.B. verschwenkbar, um eine horizontale Ausrichtung zu ermöglichen, selbst wenn die Stützverlängerung in einer vom Untertisch gelösten Stellung gekippt steht).

Bei einer Gestaltungsvariante, wie sie beispielsweise in der Figur 2 gezeigt ist, können mehrere Stützverbindungen, in Figur 2 sind es zwei, auch miteinander verbunden werden, um gemeinsam einen stabilen Abstützblock zu bilden. Hierzu weist jede der Stützverbindungen im Übergangsbereich von dem Stützschenkel zum Auflageabschnitt 26 Aufnahmeöffnungen auf, in die die freien Enden 22a Verbindungsstege 22 einer anderen Stützverbindung gleicher Weise aufgenommen werden können, wie an dem Untertisch 12. Im montierten Zustand liegt folglich einer der Auflageabschnitte 26 der verbundenen Stützverbindungen 20 auf dem Boden bzw. einer Unterlage auf und dient wie die flächige Bodenseite 28 einer Stützverbindung 20 zum stabilen Abstellen auf dem Boden bzw. einer ebenen Oberfläche oder Unterlage. Umgekehrt dient auch eine flächige Bodenseite 28 einer der Stützverbindungen 20 als Auflageabschnitt für das zu bearbeitende Werkstück W.

## Patentansprüche

1. Kapp- und /oder Zugsäge (10), mit einem Untertisch (12) mit einer Oberfläche (14) zur Aufnahme und Abstützung eines zu bearbeitenden Werkstücks (W), wobei der Untertisch (12) wenigstens zwei Stützverlängerungen (20) mit einem Auflageabschnitt (26) umfasst, der zur Aufnahme und Abstützung des zu bearbeitenden Werkstücks (W) dient, wobei jede Stützverlängerung (20) relativ zu dem Untertisch (12) zwischen einer eingeschobenenen Stellung und einer ausgezogenen Stellung in einer zur Oberfläche (14) des Untertischs (12) parallelen Ebene hin- und herbewegbar ist und hierzu wenigstens einen Verbindungssteg (22) aufweist, der zur Verbindung der Stützverlängerung (20) mit dem Untertisch (12) zumindest abschnittsweise in eine korrespondierende Ausnehmung an dem Untertisch (12) in der zur Oberfläche (14) des Untertischs (12) parallelen Ebene einschiebbar und zur Lösung der Verbindung in der zur Oberfläche (14) des Untertischs (12) parallelen Ebene vollständig aus der Ausnehmung herausziehbar ist, sowie wenigstens einen Stützschenkel (24) zur stabilen Abstützung der Stützverlängerung (20), wobei die Stützverlängerung (20) in einer vom Untertisch (12) gelösten Stellung des Verbindungsstegs (22) als separate Abstützung für das zu bearbeitende Werkstück (W) genutzt werden kann, **dadurch gekennzeichnet, dass** die wenigstens zwei Stützverlängerungen (20) in einem von dem Untertisch (12) gelösten Zustand miteinander verbindbar sind, wobei an jedem Stützschenkel (24) der miteinander verbindbaren Stützverlängerungen (20) wenigstens eine korrespondierende Aufnahmeausnehmung zur Aufnahme des wenigstens einen Verbindungsstegs (22) der jeweiligen zu verbindenden Stützverlängerung (20) vorgesehen ist.

2. Kapp- und/oder Zugsäge nach Anspruch 1, wobei die Stützverlängerung (20) wenigstens zwei Stützschenkel (24) aufweist, von denen wenigstens einer relativ zu dem Verbindungssteg (22) bewegbar, insbesondere verschiebbar, ausgebildet ist.

3. Kapp- und/oder Zugsäge nach einem der vorhergehenden Ansprüche, wobei wenigstens einer der Stützschenkel (24) einer Stützverlängerung (20) eine flächige Bodenseite (28) zum stabilen Abstellen auf einer ebenen Oberfläche aufweist.

4. Kapp- und/oder Zugsäge nach Anspruch 3, wobei bei zwei miteinander verbundenen Stützverlängerungen (20) die flächige Bodenseite (28) einer der Stützverlängerungen (20) zur Aufnahme und Abstützung des zu bearbeitenden Werkstücks (W) genutzt werden kann.

## Claims

1. Crosscut and/or pull saw (10), having an under-table (12) with a surface (14) for receiving and supporting a workpiece (W) to be machined, the under-table (12) comprising at least two supporting extensions (20) with a bearing section (26) which serves to receive and support the workpiece (W) to be machined, wherein each support extension (20) is movable to and fro relative to the lower table (12) between a retracted position and an extended position in a plane parallel to the surface (14) of the lower table (12) and has at least one connecting web (22) for this purpose, which can be inserted at least in sections into a corresponding recess on the lower table (12) in the plane parallel to the surface (14) of the lower table (12) in order to connect the support extension (20) to the lower table (12) and can be pulled completely out of the recess in order to release the connection in the plane parallel to the surface (14) of the lower table (12), as well as at least one support leg (24) for the stable support of the support extension (20), wherein the support extension (20) can be used as a separate support for the workpiece (W) to be machined in a position of the connecting web (22) which is detached from the lower table (12),
**characterized in that** the at least two support extensions (20) can be connected to each other in a state of being detached from the lower table (12), wherein at least one corresponding receiving recess is provided on each support leg (24) of the support extensions (20) which can be connected to each other for receiving the at least one connecting web (22) of the respective support extension (20) to be connected.

2. Crosscut and/or pull saw according to claim 1,
wherein the support extension (20) has at least two support legs (24), at least one of which is designed to be movable, in particular displaceable, relative to the connecting web (22).

3. Crosscut and/or pull saw according to one of the preceding claims,
wherein at least one of the support legs (24) of a support extension (20) has a flat bottom side (28) for stable placement on a flat surface.

4. Crosscut and/or pull saw according to claim 3,
wherein, in the case of two interconnected support extensions (20), the flat base side (28) of one of the support extensions (20) can be used to receive and support the workpiece (W) to be machined.

## Revendications

1. Scie à tronçonner et/ou à tirer (10), comportant une table inférieure (12) avec une surface (14) pour recevoir et supporter une pièce à usiner (W), la table inférieure (12) comprenant au moins deux prolongements de support (20) avec une section de support (26) qui sert à recevoir et à supporter la pièce à usiner (W), dans lequel chaque rallonge de support (20) peut être déplacée en va-et-vient par rapport à la table inférieure (12) entre une position rentrée et une position sortie dans un plan parallèle à la surface (14) de la table inférieure (12) et présente à cet effet au moins une nervure de liaison (22), qui peut être inséré au moins par sections dans un évidement correspondant de la table inférieure (12) dans le plan parallèle à la surface (14) de la table inférieure (12) afin de relier la rallonge de support (20) à la table inférieure (12) et peut être complètement retiré de l'évidement afin de libérer la connexion dans le plan parallèle à la surface (14) de la table inférieure (12), ainsi qu'au moins un pied d'appui (24) pour l'appui stable de la rallonge de support (20), la rallonge de support (20) pouvant être utilisée comme support séparé pour la pièce à usiner (W) dans une position de la barrette de liaison (22) libérée de la table inférieure (12),
**caractérisé en ce que en ce que** les au moins deux rallonges de support (20) peuvent être reliées entre elles dans un état où elles sont détachées de la table inférieure (12), au moins un évidement de réception correspondant étant prévu sur chaque pied de support (24) des rallonges de support (20) pouvant être reliées entre elles, pour recevoir l'au moins une nervure de liaison (22) de la rallonge de support (20) respective qui doit être reliée.

2. Scie à tronçonner et/ou à tirer selon la revendication 1,
dans lequel l'extension de support (20) comporte au moins deux jambes de support (24), dont au moins une est conçue pour être mobile, en particulier déplaçable, par rapport à la traverse de liaison (22).

3. Scie à tronçonner et/ou à tirer selon l'une des revendications précédentes,
dans lequel au moins une des jambes de support (24) d'une extension de support (20) a un côté inférieur plat (28) pour un placement stable sur une surface plane.

4. Scie à tronçonner et/ou à tirer selon la revendication 3,
dans lequel, dans le cas de deux extensions de support (20) interconnectées, la face de base plate (28) de l'une des extensions de support (20) peut être utilisée pour recevoir et soutenir la pièce (W) à usiner.
